# EUROPEAN PATENT SPECIFICATION

(11) **EP 2 387 878 B1**
(45) Date of publication and mention of the grant of the patent: **18.01.2017**
(21) Application number: 11166576.6
(22) Date of filing: 18.05.2011
(51) Int. Cl.: A01J 25/12, A01J 25/16, A23C 19/068, A23C 19/16

(54) **RIPENED SEMI-HARD OR HARD CHEESE, AND ITS PREPARATION**
GEREIFTER HALBHARTER ODER HARTER KÄSE UND DESSEN HERSTELLUNG
FROMAGE DUR OU SEMI-DUR AFFINÉ ET SA PRÉPARATION

(30) Priority: 18.05.2010 NL 2004737
(43) Date of publication of application: 23.11.2011
(73) Proprietor: FrieslandCampina Nederland B.V., 3818 LE Amersfoort (NL)
(72) Inventor: Penders, Johannes Antonius, 5324 AV, Ammerzoden (NL); De Pinth, Hiëronymus Petrus Adriaan, 5074 PX, Biezenmortel (NL)
(74) Representative: Nederlandsch Octrooibureau

(56) References cited:
- EP-A1- 0 888 710
- WO-A1-2008/130227
- DE-A1- 2 032 921
- GB-A- 937 441
- NL-C2- 1 016 861
- NL-C2- 1 025 011

## Description

### FIELD OF THE INVENTION

The present invention relates to an improved process for preparing semi-hard or hard cheese, in particular a cheese of the Gouda-type, wherein the shape prior to and/or during ripening is maintained and controlled. The invention also pertains to a ripened semi-hard or hard cheese thus obtained. The invention particularly rests in the field of low-fat and low-salt cheese, or cheese having increased levels of water or soft fat.

### BACKGROUND OF THE INVENTION

Conventional methods to prepare a cheese of the hard or semi-hard type involve a ripening step, wherein the young cheese, after brining, is ripened for at least four weeks. In the art, the traditional ripening step is referred to with the term "standard ripening" or, also, "natural ripening" [in Dutch "natuurrijpen"].

Natural ripening yields significant shape deformations. During natural ripening, cheeses are, after brining, allowed to air-dry separately on (wooden) shelves and develop a rind over time. During natural ripening, gravity causes the cheese to deform due to spreading out, or "flow", of the cheese mass. This flow-induced deformation may to some extent be counteracted by the relative high salt content at the cheese exterior promptly after brining, which provides for some flow resistance. At a later stage of the natural ripening process, moisture loss results in the formation of a cheese rind, which may partly function as a "corset" for the ripening cheese mass. However, the rind of naturally ripened cheese is not strong enough to prevent flow-induced deformation, which is particularly noticeable as the bulging out of the upright side walls of the lying cheese. This problem of shape deformation is even more pronounced in cheeses having a reduced fat and/or reduced (sodium) salt and/or increased moisture or soft fat content. Due to their specific consistency, these cheeses have an increased susceptibility to flow-induced deformation. Moreover, in low-salt or high-moisture cheeses the above-described flow resistance of the freshly brined cheese is relatively weak.

For example, a typical Gouda-type semi-hard cheese has dimensions promptly after brining of length 48 cm and height 29 cm. After 4 weeks of ripening, it was found that this length has become 45.4 cm at the side and 47.2 cm in the middle, and the width has become 27.3 cm at the side and 30.0 cm in the middle. For a low-fat cheese, starting from the same initial dimensions, the length had become 45.2 and 48.5 cm, respectively, and the width 27.8 cm and 32.1 cm, respectively. This demonstrates that flow-induced deformation during ripening is even stronger in non-standard, such as low-fat cheeses.

Various ripening methods have been developed over time. EP 1.287.744 discloses cheese manufacturing in which the brined cheese is packaged in a foil, evacuated, and then ripened. Compared to natural ripening, moisture and cutting losses are thus reduced. To avoid bitter flavors associated with foil-ripening conventional starters are accompanied with an adjunct starter having a higher proteolytic and/or peptidolytic capacity.

Also DE 203921 is related to foil ripening. This publication is particularly directed at preventing and counteracting shape deformation of rindless blocks of Emmentaler-type cheeses, wherein said deformation emanates from the carbon dioxide released due to Propionibacterium-mediated fermentation. To this end, foil-covered cheeses are stacked in boxes or crates, wherein the boxes and crates are regularly turned.

Likewise, EP0888710 is aimed at preventing deformation due to excessive gas formation due to propionic acid fermentation in foil-ripened cheese. For that purpose, block-shaped film-packaged cheeses are packed individually in lid-equipped boxes, said boxes being reinforced by a pattern of ribs.

GB 937,441 discloses a method for ripening of cheese, wherein cheese is first wrapped in Cryovac foil and subsequently compressed between rigid panels exerting permanent lateral pressure. It aims at preventing air from accessing the cheese and avoiding formation of a rind due to loss of moisture by evaporation.

WO 2008/130227A1 seeks to solve the problem of cheese deformation after ripening, during transport due to mismatch between the dimensions of stacked foil-packed cheese blocks and standard-sized road transport pallets.

All of the above documents relate to cheese that is foil-ripened exclusively.

In NL 1025011 cheese ripening is further improved by combining foil ripening and natural ripening, the combination referred to in Dutch as "combi-rijpen": either the natural ripening step is preceded by foil ripening or *vice versa.* In the first embodiment the aim is to prepare a cheese having a fresh appearance, while substantially retaining the shape during foil ripening. In the second embodiment the cheese is first allowed to develop its traditional flavors, while recovering the moisture distribution afterwards. Shape deformations during natural ripening are substantially reduced during subsequent foil ripening, in the examples of NL 1025011 by placing the cheese during foil ripening on its side. However, as addressed in the accompanying examples, in terms of shape there is still room for improvement.

This is particularly the case since nowadays - for other reasons - more preferred foils than the Cryovac BB4 foil applied in NL 1025011 show less efficient in retaining the shape of the cheese during ripening. Also, health-conscious consumer-markets and authority regulations nowadays stimulate low-salt and low-fat cheese production. A lowering of salt and/or fat levels increases flow behavior during ripening, and, consequently, intensifies shape issues. Shape issues are also more pronounced when ripening involves elevated temperatures, up to 20 °C.

From NL 1016861 it is known that naturally ripened cheese can be transformed to a different shape by exerting pressure to the cheese, f.i. from round to square with rounded corners or from square to right angular. Said transforming is not very accurate dimension wise. After removing the pressure there appears to be always some relaxation following such a transformation.

Although shape deformation due to propionic acid fermentation and the concomitant release of carbon dioxide gas has been recognized in the art, none of the available prior art address the shape deformation problems associated with increased flow behavior during ripening. This increased flow behavior is particularly pronounced in cheese having reduced salt and/or fat levels, and/or having increased moisture content, and/or said containing a large amount of soft fat. In foil-ripened cheese inherently no rind is formed that may serve to at least partly curb flow-induced deformation.

Furthermore, none of these documents appreciate the importance the formation of a visible "drying edge", i.e. a part with a marked color gradient of defined width at the edge of a sliced piece of cheese. Such a drying edge, which furnishes the cheese slices with a "natural", traditional appearance is highly appreciated by customers.

Demands from high-speed cutting, slicing and processing lines for converting cheeses into consumer ready packages ask for very accurate dimensions with a small standard deviation. E-weight packaging with standard weight size as preferred by the trade is also demanding more standardized shapes and dimensions for ripened cheeses. It is thus clear that improved control of the ultimate shape of the cheese has enormous economical benefits, for instance by reducing cutting losses in subsequent processing steps. Presently, cutting losses in traditional ripening methods due to shape deformations are for Gouda-type cheese estimated at up to 15 %.

### SUMMARY OF THE INVENTION

It is an objective of the invention to provide a method for preparing a semi-hard or hard cheese, wherein, in a conventional manner, a cheese of the semi-hard or hard type is formed, which, after brining, is subjected to ripening for a period of at least 4 weeks, said ripening involving a combination of foil ripening and natural ripening, and wherein shape deformations caused during ripening are reduced prior to cooling (i.e. the end of the ripening period). Advantageously, cutting losses are minimized, and 'constant shape' control improves further handling steps.

It is another objective of the invention provide a method for preparing a semi-hard or hard cheese which has an attractive "drying edge", i.e. a part with a marked color gradient of defined width at the edge of a sliced piece of cheese.
It is however found that the natural ripening step needed to achieve the desired drying edge causes shape deformations during ripening that necessitate trimming or "shaving" in order to arrive at constant shapes.

It is found by the present inventors that much of the shape of the cheese can be maintained during ripening by exerting pressure to at least the top and bottom of the cheese during at least a substantial part of the (foil) ripening period, preferably until the cheese is cooled. By applying pressure to top and bottom surface of the cheese the height variations of the ultimately ripened cheese is thus controlled (i.e. reduced), which in turn corresponds to controlling the size of cheese slices in consumer applications. In the art, standard deviations of 0.6 cm are easily obtained. With the present invention, such standard deviations can be reduced to less than 0.4 cm, or even 0.3 cm or less. This corresponds to a 55 % reduction in height variations, compared with the art.

The invention particularly aims to solve the problem of 'buiken', i.e. surface fluctuations or deformations, such as bulging, visible by the eye. It is less of a concern to control the actual size dimensions (height, width, length) of the cheese itself.

It is found beneficial to involve an additional step of pressing the natural ripened cheese into a mould for at least 4 minutes, before further processing (i.e. 'pre-shaping'). These 4 minutes are considered to render sufficient time to perform further handling steps, before relaxation sets in. The mould reduces the length of the cheese preferably by 0.8 - 1.5 %, and its width typically with 2 - 4.5 %.

It was surprisingly found by inventors that shape deformations due to flow in naturally ripened cheese can be restored in the foil ripening stage by exerting pressure to at least the top and bottom of the cheese during at least a substantial part of the foil ripening period. This is not straightforward, as the rind formed during natural ripening, which is particular tough in low-fat and low-salt cheese due to increased moisture losses per time unit, has so far been considered to impede any substantial shape restoration.

Maintaining the shape of the cheese during ripening and an optional premoulding step are particularly advantageous if the cheese has a reduced fat and/or reduced salt content, and/or if ripening involves elevated temperatures (e.g. above 14 °C), and/or if the cheese has increased moisture content (expressed in terms of MFFB content, preferably greater than 59 %), and/or if the cheese contains large amounts of soft fat.

### LIST OF FIGURES

Figure 1 shows blocks of cheeses separated from one another by pressurizing plates 1. Each block of cheese 2 has a top surface 3, a bottom surface 4, and a peripheral wall 5.
Figure 2 schematically depicts a container 6 with a lid 7 holding a pre-determined amount of cheeses, each layer of cheeses separated by pressurizing plates or shelves.

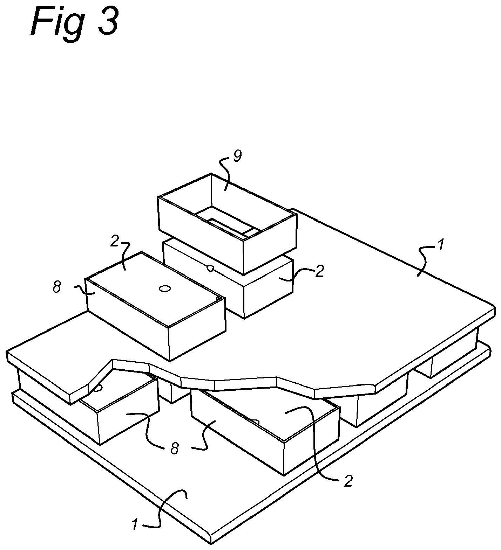

Figure 3 shows a cheese framed in a holder 8 with a peripheral wall 9. The holder with cheese can be stacked for instance as shown in Figure 1.

### DETAILED DESCRIPTION OF THE INVENTION

The invention pertains to a method for preparing a semi-hard or hard cheese according to one or more of the embodiments according to the accompanying claims.

More particularly, the invention pertains to a method for preparing a semi-hard or hard cheese, wherein said semi-hard cheese comprises a moisture fat-free content (MFFB) of 54 - 69 % and said hard cheese comprises a MFFB of 49 - 56 %, wherein said cheese
- comprises 0-25 wt% fat, based on its dry matter, and/or
- has a sodium content less than 900 mg Na/100 g cheese, and/or
- has a moisture content, expressed in terms of MFFB content, that is greater than 59 %, preferably greater than 61, more preferably greater than 65 %, and/or
- has a solid fat content of less than 20 %, more preferably less than 15 %, most preferably less than 10 %, as measured at 15 °C in accordance with ISO 8292,
wherein a cheese of the semi-hard or hard type is formed, which, after brining, is subjected to ripening for a period of at least 4 weeks,
said ripening comprising natural ripening and subsequent foil ripening,
and wherein pressure is continuously exerted on at least the top and bottom surface of said cheese during at least said foil ripening, preferably until said cheese is cooled.

### Semi-hard or hard cheese

The invention is not particularly limited to a type of cheese, provided it is in a form which in the field is considered as a semi-hard or hard cheese. "Semi-hard" and "hard" cheeses are understood to comprise a moisture fat-free content (MFFB) of 54 - 69 % and 49 - 56 %, respectively. The MFFB value equals 100% * weight of moisture in the cheese / (total weight of cheese - weight of fat in cheese).

The semi-hard or hard cheeses of the invention are preferably subjected to bacterial ripening for at least 6 weeks, more preferably at least 8 weeks. These bacterial-ripened cheeses unmistakably distinguish from fresh, soft or process cheeses. Bacterial-ripened cheese of the invention is also different from mould ripened cheeses such as Camembert, Brie, Roquefort, Munster etc..

The invention is found particularly suitable for a semi-hard cheese of the Gouda type or Edam type, including Milner cheese, due to its constant and flexible texture. Terms such as "Edam", "Gouda" and "Milner" are directly and unambiguously clear to the skilled person in the field, supported by common general knowledge from e.g. Walstra et al. in chapter 2 of "Cheese: Chemistry, Physics and Microbiology", Volume 2, Major cheese Groups, ed. P.F. Fox, Chapman & Hall, ISBN 0 412 53510 6 (V.2)". Alternatively, numerous state-regulated cheese standards, such as the US - 21 C.F.R. 133 describe and define the ingredients and manufacturing processes marking these varieties. Gouda and Edam are well-described in Codex Stan 266--1966 and 265-1966, respectively. The preferred, ripened cheese may be referred to as a Gouda- or Edam-type.

Process-wise, semi-hard or hard cheese manufacture involves mixing (skimmed) milk with a starter conventionally containing mesophilic or thermophilic bacteria, respectively, and subsequent setting of the curd. The curd/whey mixture which is subjected to drainage, scalding, curd washing, pressing and moulding, brining and ripening. Details are given in Ch. 27.3 of Walstra et al. "Dairy Science and Technology" 2nd ed., herein thus incorporated by reference.

In the pressing and moulding step, the shape of the cheese is determined. In the context of the invention, it is preferred that the cheeses are formed into rectangular blocks (such as the 50 x 30 x 10 cm Euroblock), cylinders, spheres or disks. These kinds of shapes are characterized by having a top and bottom surface. Shape issues are particularly significant in those embodiments.

### Low-salt, low-fat, increased moisture content, large soft fat content

The invention relates to cheeses that are characterized by having a low salt or low fat content, or having increased moisture or soft fat content, or combinations thereof.

As mentioned before, the method is found particularly useful if the semi-hard or hard cheese has a reduced fat and/or reduced salt content, particularly at least a reduced salt content. As mentioned above, flow behavior is especially pronounced in those embodiments. The increased flowability affects shape. A "low-fat" cheese preferably comprises 10 - 25 wt% fat, based on total solids.

In one embodiment, the invention thus encompasses low or reduced-fat cheeses, commercialized as 0+, 5+, 10+, 15+, 20+ cheeses, wherein the qualification "+" usually implies an upward margin of 5 %. Hence, 0+ cheese accordingly contains up to 5 wt% fat, based on its dry matter. In terms of its dry solids content, such a reduced-fat cheese contains 0 - 25 wt% fat, more preferably at least 10 wt% fat. However, in another embodiment, the invention pertains to 30+ cheese, having a fat content of about 30 - 38 wt%, more preferably up to 34 wt%, based on its dry matter.

In another embodiment, the invention pertains to a semi-hard or hard cheese having reduced salt content. In the field, the salt content is preferably represented by the amount of sodium comprised in the cheese. The sodium content is less than 900 mg Na/100 g cheese, more preferably less than 800 mg Na/100 g, most preferably less than 700 mg Na/100 g, especially less than 600 mg Na/100 g cheese. The aforementioned numbers particularly apply to cheese of the Gouda- or Edam-type.

In a preferred embodiment, the invention pertains to a semi-hard or hard cheese having a reduced salt and reduced fat content as outlined in the two preceding paragraphs.

Alternatively or additionally, the invention pertains to a cheese containing increased amounts of soft fat, due to the increased flow associated therewith. Shape issues are particularly pronounced if the cheese has a solid fat content of less than 20 %, more preferably less than 15 %, most preferably less than 10 %, as measured at 15 °C; SFC is measured as the amount of solid fat relative to the total amount of fat, in accordance with ISO 8292 (NMR pulse).

Alternatively or additionally, the invention pertains to a cheese containing increased moisture content, expressed in terms of MFFB content, greater than 59 %, more preferably greater than 60, most preferably greater than 61 %. Preferably, the moisture content is smaller than 69 %.

### Ripening; shape

In the context of the invention, the (bacterial) ripening involves combi-rijpen ("combi-ripening"), i.e. natural ripening and subsequent foil ripening. When combi-ripening is applied, natural ripening precedes foil ripening. The total ripening period, i.e. natural ripening and foil ripening, lasts for at least four weeks, and preferably no longer than 52 weeks, more preferably 4 - 26 weeks. It is preferred that the initial natural ripening period takes at least 1 week, preferably at least 2 weeks. In relative terms, it is preferred that natural ripening takes at least 25 %, more preferably at least 50 - 75 % of the total bacterial ripening period. The invention however does not attempt to amend conventional ripening conditions such as laid down in the aforementioned Walstra publications, NL 1025011 and EP 1.287.744. Ripening temperatures typically are between 7 and 20 °C. The conventional ripening temperature is less than 14 °C.

In one embodiment, the method of maintaining shape is preferably performed in combination with elevated ripening temperatures. As addressed before, shape issues are particularly pronounced at these elevated temperatures (i.e. increased flow behavior), preferably at least 14 °C, most preferably at least 15 °C, especially at least 16 °C, particularly at least 17 °C.

In one embodiment, it is preferred to maintain the shape of the cheese during foil ripening by continuously and substantially homogeneously exerting pressure onto the top surface of the cheese. "Substantially homogenously" is intended to mean that pressure is non-locally or evenly distributed over the cheese surface. Advantageously, the cheese height and surface flatness are controlled.

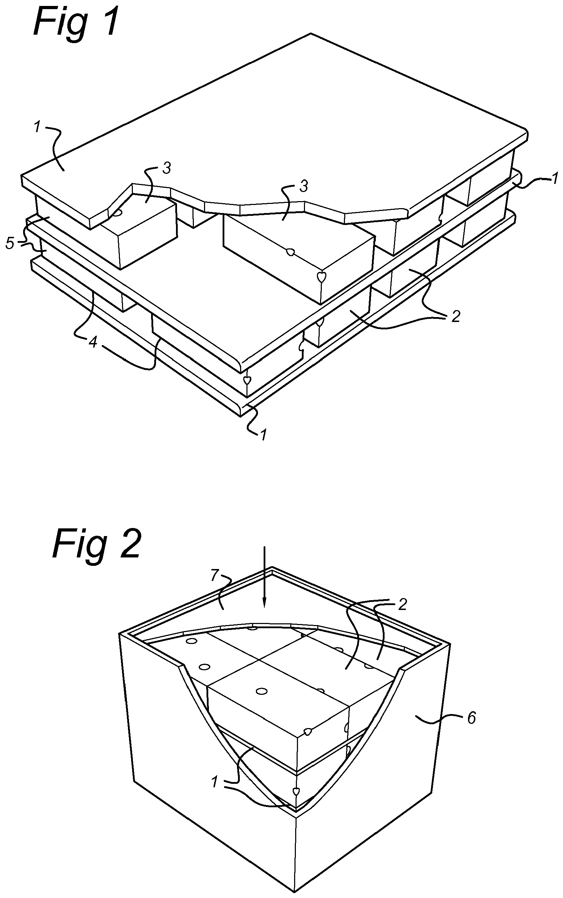

In a preferred embodiment, this is achieved by making use of a pressurizing plate placed on the top surface of the cheese. A plurality of cheeses are stacked or piled horizontally on top of each other, and the layers of cheeses are conveniently separated from one another by (wooden) shelves or plates pressing onto the top surface of the cheeses. The cheeses are thus pressed and held in shape using the weight of the cheese(s) above, and/or additional weights (e.g. for the top layer). The use of shelves or plates can aid in homogenizing the pressure and ease subsequent handling. A nonlimiting example is shown in Figure 1. To avoid too high pressure, particularly on the lowest layer of cheeses , it is preferred to stack less than 10 cheese layers, more preferably less than 8 layers.

In a preferred embodiment, additional measures are taken to control variations in both the height and the sides of the cheese. Undesirable surface curvature in any direction is thus reduced or avoided, and the cheese dimensions are controlled accurately. Thereto, the invention thus particularly relates to a method of cheese manufacture in which during ripening multiple cheeses are stacked in a box or container having a height that accounts for a fixed layer of cheeses separated by shelves from one another, wherein the box is sealed by a lid pressing onto said layers and shelves, and wherein the width and length of said box or container are set to hold a predetermined amount of cheeses side-by-side, thus exerting pressure to all sides of the cheeses. The lid thus exerts pressure onto the upper layer of cheeses sufficient to maintain it surface flat during subsequent ripening.
In this embodiment, a 'tight fit' of the cheeses in all directions is strived for. The cheeses themselves control the sides and size of their neighboring cheeses. A nonlimiting example is shown in Figure 2.

In an alternative embodiment, height, length and width of the cheese are controlled by framing the cheeses, i.e. placing the cheeses in individual holders having a peripheral wall ("omtrekswand"). The wall dimensions are selected such as to hold the cheese in place during at least a substantial part of the subsequent ripening period, the pheripheral wall thus exerting pressure on the sides of the cheese. The peripheral wall height is preferably substantially identical to the aimed height of the cheese. The holder material is rigid and does not interact with the cheese. The peripheral walls advantageously contribute to the stability of the stacks of cheeses, since it ensures that the maximum pressure exerted on the upper surface of the lowermost layer is not exceeded.

In the embodiments described in the aforegoing paragraph, the L x W of the holder may be selected to a size smaller or larger than the initial size of the cheese. The holder dimensions (L x W) may exceed those of the initial cheese, anticipating expansion of the cheese (e.g. by height reduction) during subsequent ripening. The size differences are selected such to warrant that the cheese will be hold by the peripheral wall (i.e. the walls exert pressure on the sides of the cheese) for at least substantial part of the ripening period.

In a preferred embodiment, the holder dimensions are however selected to be smaller than the L x W of the initial cheese, in which case an additional, preceding moulding step is required to fit the cheese into the holder. It is preferred that the length of the holder is 1 - 6 %, preferably 3 - 5 % smaller than the cheese length, and independently, the width of the holder is 1 - 10 %, preferably 4 - 8 % smaller than the cheese width. Advantageously, continuous pressure on the cheese peripheral wall during subsequent ripening is ensured. Details are given further below.

The framed cheeses may then be stacked into layers separated by shelves. However, in an alternative embodiment, the holder may be provided with a bottom, and said bottom may preferably be provided with stacking means. The bottom of the holder thus exerts pressure onto the top surface of the cheese underneath. Conveniently, the holder is open on the top side.

The skilled person will know how to amend these concepts to cylindrical shapes.

The cheeses are preferably maintained under pressure from the start for at least a predominant part of the foil ripening, preferably until the ripening is ended and the cheese is subsequently cooled, preferably below 10 °C, more preferably until a temperature of 7 °C or lower is reached. Such cooling is preferably continued for at least two days, more preferably at least 1 week. At decreased temperature, flow - and thus shape deformations - are ultimately stopped.

If desired, the cheese may be shrunk to smaller dimensions immediately prior to enclosure into the afore-discussed holder or container. Such a step is particularly found useful in case the cheese has been subjected to natural ripening previously, as is the case during combi-rijpen. In the moulding step the cheese is shrunk to pre-determined dimensions in a mould. Although not deemed necessary, it is preferred that the above moulding step is conveniently performed after foil packaging and shrinking around the cheese, e.g. by immersion in hot water.

The cheese is maintained in the mould for a period of at least 4 minutes, typically 5 - 10 minutes. No advantageous effects are obtained after extended waiting times. After moulding, the subsequent enclosure into the container is preferably performed within 10 minutes, more preferably within 5 minutes, to minimize more elastic deformations.

A cheese that is subjected to ripening under the aforementioned conditions can be distinguished from the prior art. In the prior art, the surface curvature arising during ripening must be accounted for in subsequent shaving or cutting steps. Such actions are for instance recognized by the loss of coating and rind. With the present invention, there is no longer a need to shave or cut the cheese to its desired flat dimensions.

The cheese has been subjected to natural ripening for at least a part of the total ripening period. In such embodiment, a cheese (slice) obtained from a cheese ripened according to the present invention exhibits a "drying edge", i.e. a part with a marked colour gradient at the edge. The colour gradient is caused by drying and is a feature of naturally ripened cheese. This drying edge is due to the loss of moisture during ripening. The presence of a drying edge is often considered attractive by cheese buyers. Naturally ripened cheese that is trimmed or "shaved" also has such a drying edge originally, but in the art it is removed by the trimming operation, so it is not obvious at a glance that the slice of cheese is a (partly) naturally ripened product. This issue is solved with the present invention.

In the case of cheese ripened for about 12 months, this gradient covers a wider area of the cheese slice than in the case of cheese ripened e.g. for about 1 month. The width of the area with the colour gradient varies from 3 mm to 10 mm and is preferably at least 5 mm.

The thickness of the drying edge can be determined by taking a photocopy of a cheese slice with a thickness of 1-10 mm. The picture should be taken without contour reflection, i.e. the reflection plate normally present in the photocopier should be open when the copy is taken. The drying edge then shows up as a clearly visible strip that is darker than the central part of the image of the slice in the photocopy. The thickness of the drying edge can be easily measured on this picture.

In one embodiment, the invention relates to a holder containing a peripheral wall which exerts pressure on a cheese which undergoes ripening, preferably foil ripening. The holder may be provided with a bottom, and/or provided with stacking means.

### EXAMPLES

### Example 1

A rectangular semi-hard 30+ cheese (originally L 50 cm, W 30 cm) provided with a plastic coating as a result of 4 weeks of a natural ripening at 13 °C, was then vacuum sealed in a shrink foil. The cheese bulged out somewhat on several sides as a result of flow during the natural ripening period. After packaging, the cheese was immersed in hot water, thus shrinking the foil around the cheese. The cheese thus packaged was pressed into a mould, to a rectangular shape of about 48 x 28 cm. After 4 minutes the cheese was removed from the mould and subsequently stacked in a box fitting 7 layers with 8 cheeses [box dimensions were 1160 x 905 x 830 (LxWxH)]. The layers were separated from one another by wooden shelves, and the top of the box was sealed by a lid pressing onto the layers and shelves. The cheeses were subjected to foil ripening at 20 °C for at least 4 weeks, and cooled for at least one week afterwards.

### Example 2

Example 1 was repeated with a semi-hard cheese with decreased salt content. The cheese obtained had a Na content of about 500 mg Na/100 g cheese.

### Example 3

A semi-hard cylindrically shaped reduced-salt cheese of 12 kg in weight was provided with a plastic coating. The cheese had a sodium content of about 500 mg Na/100 g cheese. After 8 weeks of natural ripening it was vacuum sealed and pressed into a cylindrical mould. The mould was placed in crates adapted to this purpose, and crates were stacked on top of one another. The crates thus pressed onto the surface of the underlying cheese, thus controlling the shape of its surface. The cheeses were then subjected to foil ripening, and cooled. After cooling, packaging was removed and the cheese was converted to units suited for consumer applications. It was found much easier to control the weight of these units than before, due to the controlled shape.

### Comparative Example I

Shape deformations were studied for the cheeses subjected to pressure according to the conditions laid down in examples 1 - 3. The numbers were compared to those values obtained for cheese that has not been subjected to pressure during ripening.

Due to the measures taken in accordance with the present invention shape deformations were reduced by 30 to 60 % in length, 40 - 70 % in width and 50 - 80 % in height with respect to the conventionally treated cheese. The lower and upper limits in the above ranges correspond to 4 to 10 weeks of foil ripening and at least 4 weeks of subsequent storage, respectively.

### Comparative Example II

Slices were cut from a cheese ripened according to example 1. Compared to a cheese which had not been subjected to any pressurizing steps during ripening, cutting losses were reduced from 10 to 8 %, which corresponds to a 20 % improvement. 46 cm cheese blocks are cut from another cheese ripened according to example 1. Compared to a cheese which had not been subjected to any pressurizing steps during ripening, it was possible to save 10 mm (2 %) of the cheese sides.

## Claims

1. A method for preparing a semi-hard or hard cheese, wherein said semi-hard cheese comprises a moisture fat-free content (MFFB) of 54 - 69 % and said hard cheese comprises a MFFB of 49 - 56 %, wherein said cheese
- comprises 0-25 wt% fat, based on its dry matter, and/or
- has a sodium content less than 900 mg Na/100 g cheese, and/or
- has a moisture content, expressed in terms of MFFB content, that is greater than 59 %, preferably greater than 61, more preferably greater than 65 %, and/or
- has a solid fat content of less than 20 %, more preferably less than 15 %, most preferably less than 10 %, as measured at 15 °C in accordance with ISO 8292,
wherein a cheese of the semi-hard or hard type is formed, which, after brining, is subjected to ripening for a period of at least 4 weeks,
said ripening comprising natural ripening and subsequent foil ripening,
and wherein pressure is continuously exerted on at least the top and bottom surface of said cheese during at least said foil ripening, preferably until said cheese is cooled.

2. The method according to claim 2, wherein said pressure is exerted by stacking multiple cheeses on top of one another, preferably separating said cheeses from one another by pressurizing plates or shelves which rest on the top surfaces of said cheeses, and wherein said pressure is exerted by the weight of cheeses resting on said plates or shelves and/or additional weights.

3. The method according to any one of claims 1-2, wherein said multiple cheeses are stacked in a container having a height that accounts for a fixed amount of layers of cheeses separated by plates or shelves from one another, wherein the container is sealed by a lid pressing onto said layers and plates or shelves, and wherein the width and length of said container are set to hold a predetermined amount of cheeses side-by-side, said cheeses thus exerting pressure onto the neighboring cheeses.

4. The method according to any one of claims 1-3, wherein prior to stacking said cheeses are framed in a holder having a peripheral wall, wherein the holder dimensions are selected to exert pressure on the sides of the cheese for at least substantial part of said ripening.

5. The method according to any one of claims 1-4, wherein said cheese prior to foil ripening, optionally after a preceding natural ripening step, is molded for at least 4 minutes, to obtain pre-fixed dimensions.

6. The method according to any one of claims 1-5, wherein the time lapsed between molding and said stacking is less than 10 minutes.

7. The method according to any one of claims 1-6, wherein said pressure is applied until the cheese is cooled below 10 °C.

## Patentansprüche

1. Verfahren zur Herstellung von halbfestem Käse oder Hartkäse, wobei der halbfeste Käse einen fettfreien Feuchtigkeitsgehalt (moisture fat-free content, MFFB) von 54-69% aufweist, und wobei der Hartkäse einen MFFB von 49-56% aufweist, und wobei der Käse
- 0-25 Gew.% Fett basierend auf der Trockenmasse aufweist, und/oder
- einen Natriumgehalt von weniger als 900 mg Na/100 g Käse aufweist, und/oder
- einen als MFFB-Gehalt ausgedrückten Feuchtigkeitsgehalt aufweist, der größer als 59%, vorzugsweise größer als 61%, und stärker bevorzugt größer als 65% ist, und/oder
- einen Festfettgehalt von weniger als 20% aufweist, stärker bevorzugt weniger als 15%, am stärksten bevorzugt weniger als 10%, gemessen bei 15°C gemäß ISO 8292,
wobei ein Käse der halbfesten oder harten Art entsteht, den man nach dem Einlegen in Salzlake für einen Zeitraum von 4 Wochen reifen lässt, wobei die Reifung eine natürliche Reifung sowie eine anschließende Folienreifung umfasst, und wobei kontinuierlich Druck zumindest auf die obere und untere Oberfläche des Käses ausgeübt wird, zumindest während der Folienreifung, vorzugsweise bis der Käse gekühlt wird.

2. Verfahren gemäß Anspruch 1, wobei der Druck durch Stapeln von mehreren Käsen übereinander ausgeübt wird, wobei vorzugsweise die Käse mittels Druckplatten oder Borde voneinander getrennt werden, die auf der Oberseite der Käse liegen, und wobei der Druck durch das Gewicht der Käse, die sich auf den Platten oder Borden befinden und/oder durch zusätzliche Gewichte ausgeübt wird.

3. Verfahren gemäß einem der Ansprüche 1-2, wobei die mehreren Käse in einem Behälter gestapelt werden, der eine Höhe aufweist, die auf eine feste Anzahl an gestapelten Käsen, die durch Platten oder Borde voneinander getrennt sind, ausgelegt ist, und wobei der Behälter durch eine Abdeckung versiegelt wird, die auf die Lagen und Platten oder Borde drückt, und wobei die Breite und die Länge des Behälters so eingestellt werden, dass er eine feste Anzahl von Käsen fassen kann, die Seite an Seite liegen, wobei die Käse auf diese Weise Druck auf die benachbarten Käse ausüben.

4. Verfahren gemäß einem der Ansprüche 1-3, wobei die Käse vor dem Stapeln in eine Halterung eingesetzt werden, die eine periphere Wand aufweist, wobei die Ausmaße der Halterung so gewählt sind, dass Druck auf die Seiten des Käses für mindestens einen wesentlichen Teil der Reifung ausgeübt wird.

5. Verfahren gemäß einem der Ansprüche 1-4, wobei der Käse vor der Folienreifung, wahlweise nach einem vorhergehenden natürlichen Reifungsschritt, für mindestens 4 Minuten geformt wird, um vorbestimmte Abmessungen zu erhalten.

6. Verfahren gemäß einem der Ansprüche 1-5, wobei die Zeit zwischen Formen und Stapeln weniger als 10 Minuten beträgt.

7. Verfahren gemäß einem der Ansprüche 1-6, wobei der Druck solange angewendet wird, bis der Käse auf unter 10°C gekühlt ist.

## Revendications

1. Procédé de fabrication d'un fromage à pâte mi-dure ou dure dans lequel ledit fromage à pâte mi-dure comprend une teneur en eau dans le fromage dégraissé (TEFD) comprise entre 54 et 69 % et ledit fromage à pâte dure comprend une TEFD comprise entre 49 et 56 %, dans lequel ledit fromage :
- comprend entre 0 et 25 % en poids de matière grasse, par rapport à sa matière sèche, et/ou
- présente une teneur en sodium inférieure à 900 mg de Na/100 g de fromage, et/ou
- présente une teneur en humidité, exprimée en termes de TEFD, supérieure à 59 %, de préférence supérieure à 61 %, plus préférablement supérieure à 65 %, et/ou
- présente une teneur en matière grasse solide inférieure à 20 %, de préférence inférieure à 15 %, plus préférablement inférieure à 10 %, mesurée à 15°C en conformité avec la norme ISO 8292,
dans lequel on forme un fromage de type à pâte semi-dure ou dure qui, après saumurage, est affiné pendant au moins 4 semaines,
ledit affinage consistant en un affinage naturel suivi d'un affinage sous feuille,
et dans lequel on exerce une pression continue au moins sur les surfaces supérieure et inférieure dudit fromage pendant au moins ledit affinage sous feuille, de préférence jusqu'au refroidissement dudit fromage.

2. Procédé selon la revendication 1, dans lequel on exerce ladite pression en empilant plusieurs fromages les uns sur les autres, de préférence en séparant lesdits fromages les uns des autres en mettant sous pression des plaques ou des étagères reposant sur les surfaces supérieures desdits fromages, et dans lequel ladite pression est exercée par le poids des fromages reposant sur les plaques ou étagères et/ou par des poids supplémentaires.

3. Procédé selon l'une quelconque des revendications 1 à 2, dans lequel lesdits plusieurs fromages sont empilés dans un conteneur présentant une hauteur qui correspond à une quantité fixe d'épaisseurs de fromages séparés les uns des autres par des plaques ou des étagères, dans lequel le conteneur est scellé par un couvercle appuyant sur lesdites épaisseurs et plaques ou étagères, et dans lequel la largeur et la longueur dudit conteneur sont réglées pour maintenir une quantité prédéterminée de fromages côte à côte, lesdits fromages exerçant ainsi une pression sur les fromages voisins.

4. Procédé selon l'une quelconque des revendications 1 à 3, dans lequel avant d'être empilés, lesdits fromages sont encadrés dans un support présentant une paroi périphérique, dans lequel les dimensions du support sont choisies pour exercer une pression sur les côtés du fromage au moins pendant une partie substantielle dudit affinage.

5. Procédé selon l'une quelconque des revendications 1 à 4, dans lequel ledit fromage, avant l'affinage sous feuille, optionnellement après une étape précédente d'affinage naturel, est moulé pendant au moins 4 minutes, pour obtenir des dimensions fixées à l'avance.

6. Procédé selon une ou plusieurs des revendications 1 à 5, dans lequel le temps écoulé entre le moulage et ledit empilement est inférieur à 10 minutes.

7. Procédé selon l'une quelconque des revendications 1 à 6, dans lequel on applique ladite pression jusqu'à ce que le fromage ait refroidi au-dessous de 10°C.
